(19) **Europäisches Patentamt / European Patent Office / Office européen des brevets**

(11) **EP 2 048 618 A1**

(12) **EUROPÄISCHE PATENTANMELDUNG**

(43) Veröffentlichungstag:
**15.04.2009 Patentblatt 2009/16**

(51) Int Cl.:
***G06T 7/20*** *(2006.01)*

(21) Anmeldenummer: 07019635.7

(22) Anmeldetag: **08.10.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder: **Delphi Technologies, Inc.**
**Troy, Michigan 48007 (US)**

(72) Erfinder:
- **Meuter, Mirko**
  **42781 Haan Gruiten (DE)**
- **Iurgel, Uri, Dr.**
  **42369 Wuppertal (DE)**
- **Müller-Schneiders, Stefan**
  **40597 Düsseldorf (DE)**

(74) Vertreter: **Manitz, Finsterwald & Partner GbR**
**Postfach 31 02 20**
**80102 München (DE)**

(54) **Verfahren zur Objekterfassung**

(57) Es wird ein Verfahren zur Detektion eines vorzugsweise einer Fahrbahn zugeordneten stationären Objekts mit bekannten Merkmalen, insbesondere Verkehrszeichens, in der Umgebung im Sichtbereich eines an einem bewegten Träger wie insbesondere einem Fahrzeug angebrachten optischen Sensors angegeben, bei dem mittels des optischen Sensors in zeitlich aufeinander folgenden Schritten Bilder aufgenommen werden, die Bewegungen des bewegten Trägers ermittelt werden, anhand der aufgenommenen Bildfolge mittels einer Bildverarbeitung für jedes Bild Objektmesspunkte anhand der bekannten Merkmale ermittelt werden, und die Objektmesspunkte mittels eines Schätzverfahrens im dreidimensionalen Raum verfolgt werden, wobei bei der Verfolgung im dreidimensionalen Raum die ermittelten Trägerbewegungen und die aktuell ermittelten Objektmesspunkte berücksichtigt werden, um die tatsächlichen Objektpositionen zu schätzen.

Initialisierung (1)

Fig. 1

erfasstes Verkehrszeichen

10

Lochkamera-Modell

1. Modellierung der bei der *Erfassung* auftretenden Fehler als Verteilung (Bildebene)

12

2. Abtasten von Partikeln aus der Verteilung

3. Projizier*en* der Partikel entlang des Richtungsstrahles in die reale Welt

EP 2 048 618 A1

**Beschreibung**

Die Erfindung betrifft ein Verfahren zur Detektion eines vorzugsweise einer Fahrbahn zugeordneten stationären Objekts mit bekannten Merkmalen, insbesondere Verkehrszeichens, in der Umgebung im Sichtbereich eines an einem bewegten Träger und insbesondere einem Fahrzeug angebrachten optischen Sensors.

Systeme zur Verkehrszeichenerkennung können dazu verwendet werden, den Fahrer eines Kraftfahrzeuges über die Verkehrszeichen an der Fahrbahn zu informieren, beispielsweise durch Projektion einer graphischen Repräsentation eines an der Fahrbahn detektierten Verkehrszeichens über ein Head-Up-Display auf die Frontscheibe des Kraftfahrzeuges. Systeme zur Verkehrszeichenerkennung können jedoch auch als Fahrerassistenzsysteme eingesetzt werden, beispielsweise um bei einer Geschwindigkeitsübertretung die Fahrgeschwindigkeit automatisch auf die zulässige Höchstgeschwindigkeit zu reduzieren.

Für die Verkehrszeichenerkennung werden Kameras eingesetzt, die die Umgebung vor dem Kraftfahrzeug aufnehmen und auf das Vorhandensein von Verkehrszeichen hin untersuchen. Eine Verkehrszeichenerkennung kann beispielsweise zweistufig durchgeführt werden. Dabei sind über eine Merkmalsextraktion potenzielle Kandidaten für Abbildungen von Verkehrszeichen in einem aufgenommenen Bild aufzufinden. Dies kann beispielsweise mittels einer Hough-Transformation, welche der Erkennung von geometrischen Formen dient, oder mittels einer Farbsegmentierung erfolgen, bei der zusammenhängende Flächen gleicher Farbe erkannt werden. Die zweite Stufe (Klassifikation) hat zur Aufgabe, zunächst festzustellen, ob es sich bei dem jeweiligen Kandidaten tatsächlich um eine Abbildung eines Verkehrszeichens handelt, um im bejahenden Falle dann den Typ des abgebildeten Verkehrszeichens zu bestimmen. Dies kann beispielsweise mittels eines Template Matching (Maskenvergleich) erfolgen.

Eine derartige Verkehrszeichenerkennung, welche von einer Datenverarbeitungseinrichtung ausgeführt wird, erfordert jedoch einen hohen Rechenaufwand, der zu einer hohen Rechenzeit führt. Darüber hinaus ist die Robustheit einer derartigen Verkehrszeichenerkennung unzureichend.

Der Erfindung liegt die Aufgabe zugrunde, eine Möglichkeit anzugeben, den Rechenaufwand bei einer Erkennung von einer Fahrbahn zugeordneten stationären Objekten zu verkürzen und/oder die Robustheit einer derartigen Erkennung zu erhöhen.

Gemäß der Erfindung wird diese Aufgabe gelöst durch ein Verfahren zur Detektion eines vorzugsweise einer Fahrbahn zugeordneten stationären Objekts mit bekannten Merkmalen, insbesondere Verkehrszeichens, in der Umgebung im Sichtbereich eines an einem bewegten Träger wie insbesondere einem Fahrzeug angebrachten optischen Sensors, bei dem mittels des optischen Sensors in zeitlich aufeinander folgenden Schritten Bilder aufgenommen werden, die Bewegungen des bewegten Trägers ermittelt werden, anhand der aufgenommenen Bildfolge mittels einer Bildverarbeitung für jedes Bild Objektmesspunkte anhand der bekannten Merkmale ermittelt werden, und die Objektmesspunkte mittels eines Schätzverfahrens im dreidimensionalen Raum verfolgt werden, wobei bei der Verfolgung im dreidimensionalen Raum die ermittelten Trägerbewegungen und die aktuell ermittelten Objektmesspunkte berücksichtigt werden, um die tatsächlichen Objektpositionen zu schätzen.

Bevorzugt werden dabei Objektmesspunkte, die einen von einem vorgebbaren erwarteten Bewegungsverhalten abweichenden Verlauf aufweisen, von der weiteren Verfolgung ausgeschlossen.

Eine zweckmäßige praktische Ausgestaltung des erfindungsgemäßen Verfahrens zeichnet sich dadurch aus, dass zur Transformation von Objektmesspunkte enthaltenden Partikeln aus der Bildebene des optischen Sensors in den durch den dreidimensionalen Raum definierten Schätzraum für entsprechende Partikel der Bildebene jeweils ein Richtungsstrahl bestimmt wird, der diejenigen Raumpunkte aus dem Sichtbereich umfasst, welche bei einer Projektion auf die Bildebene auf das jeweilige Partikel projiziert würden, und das jeweilige Partikel unter Berücksichtigung einer angenommenen Größe und Entfernung des betreffenden Objektes vom optischen Sensor entlang des Richtungsstrahles in den dreidimensionalen Schätzraum projiziert wird.

Dabei werden für die Transformation in den Schätzraum vorteilhafterweise um einen Objektmesspunkt gestreute Partikel ausgewählt, die eine entsprechende Verteilung um den Objektmesspunkt repräsentieren.

Zur Berücksichtigung der Bewegungen des bewegten Trägers bzw. Fahrzeugs werden die Bewegungen des bewegten Trägers zweckmäßigerweise durch eine entsprechende Translation und Rotation des Koordinatensystems in den dreidimensionalen Schätzraum abgebildet.

Den Partikeln kann dann in dem dreidimensionalen Schätzraum vorteilhafterweise eine Zufallsbewegung überlagert werden.

Bevorzugt wird der bewegte Träger als Mitte des Zentrums des dreidimensionalen Schätzraumes definiert.

Nach erfolgter Schätzung werden die Partikel aus dem dreidimensionalen Schätzraum in die Bildebene rückprojiziert.

Dabei können die rückprojizierten Partikel insbesondere entsprechend der Fehler um den Objektmesspunkt gewichtet werden.

Zweckmäßigerweise wird der Mittelwert der rückprojizierten Partikel als Zentrum eines Torbereichs definiert, in dem ein jeweiliges Objekt vermutet wird.

Dabei kann die Größe des Torbereichs insbesondere über eine vorgebbare Mahalanobis-Distanz der Kovarianzmatrix der rückprojizierten Partikel bestimmt werden.

Bei den bekannten Merkmalen des Objekts kann es sich beispielsweise um die Form und/oder Größe oder dergleichen handeln.

Als Schätzer ist insbesondere auch ein multimodaler Schätzer denkbar, der mehr als eine Objekthypothese aufstellen kann. Es ist also insbesondere auch ein Filter zur Berücksichtigung multimodaler Verteilungen denkbar.

Gegenstand der Erfindung ist zudem ein Computerprogramm mit Programmcode-Mitteln, um das vorstehend beschriebene Verfahren durchzuführen, wenn das Programm auf einem Computer oder einer entsprechenden Recheneinheit ausgeführt wird.

Gegenstand der Erfindung ist auch ein Computerprogrammprodukt mit Programmcode-Mitteln, die auf einem computerlesbaren Datenträger gespeichert sind, um das vorstehend beschriebene Verfahren durchzuführen, wenn das Computerprogramm auf einem Computer oder einer entsprechenden Recheneinheit ausgeführt wird.

Unter einem Computer wird hierbei eine beliebige Datenverarbeitungsvorrichtung verstanden, mit der das Verfahren ausgeführt werden kann. Dabei kann eine solche Datenverarbeitungsvorrichtung insbesondere digitale Signalprozessoren und/oder Mikroprozessoren umfassen, mit denen das Verfahren ganz oder in Teilen ausgeführt wird.

Schließlich ist Gegenstand der Erfindung auch eine Vorrichtung zur Detektion eines vorzugsweise einer Fahrbahn zugeordneten stationären Objekts mit bekannten Merkmalen, insbesondere Verkehrszeichens, in der Umgebung im Sichtbereich eines an einem bewegten Träger wie insbesondere einem Fahrzeug angebrachten optischen Sensors, mit einer Datenverarbeitungsanlage, die zur Durchführung des vorstehend beschriebenen Verfahrens ausgebildet ist.

Die Erfindung bringt also insbesondere eine Verbesserung eines Verkehrszeichen-Detektionssystems mit beispielsweise wenigstens einer Kamera als Eingangssensor mit sich, indem ein dreidimensionales Verfolgungsverfahren angewandt wird. Die von der Kamera gelieferten Eingangssignale werden durch Bildverarbeitungsmethoden verarbeitet, um Vorhersagen über mögliche Zeichenpositionen zu erzeugen, die durch Rauschen gestört sein können. Es werden Mittel angegeben, um anhand einer zeitlichen Abfolge dieser Positionsvoraussagen in Weltkoordinaten die tatsächliche Zeichenposition zu schätzen. Während bisher Objektbewegungen in Bildkoordinaten modelliert und auch die Position in solchen Bildkoordinaten geschätzt wurde, ergeben sich die Vorteile des erfindungsgemäßen Verfahrens unter anderem aus folgendem:

Die dreidimensionale Verfolgung ermöglicht die Einbeziehung der Träger- bzw. Fahrzeugbewegung in den Verfolgungsprozess. Mit der erfindungsgemäßen Lösung können automatisch solche Verkehrszeichen von einer weiteren Verfolgung ausgeschlossen werden, die jeweils einen unplausiblen Verlauf zeigen, wodurch die Anzahl unzutreffender positiver Voraussagen der Detektion signifikant reduziert wird. Das Verfolgen in Weltkoordinaten ermöglicht vernünftige Annahmen über Größe und Form des Verkehrszeichens. Solche Annahmen können dazu verwendet werden, die Verfolgung zu verbessern. Zusätzlich kann in den Verfolgungsprozess eine Form-Erkennung (form cue) mit einbezogen werden. Dazu kann insbesondere ein als solches bekannter "Condensation Algorithmus" eingesetzt werden. Die Grundidee des "Condensation Algorithmus" wurde von "Isard und Blake" entwickelt und ist beispielsweise in der entsprechenden Dissertation von "Isard" näher beschrieben (vgl. auch: "Condensationconditional density program for visual trackicking", M. Isard and A. Blake, Department of Engineering Science, University of Oxford, Oxford OX1 3PJ, UK, 1998). Dabei werden beliebige Wahrscheinlichkeitsverteilungen durch gewichtete Partikel approximiert, deren rekursive Neugewichtung anhand von neuen Messdaten und dem jeweils aktuell geschätzten Objektzustand erfolgt. Das Verfolgen in Weltkoordinaten ermöglicht eine Verfolgung auf der Basis einer Datenzusammenführung mit Daten anderer Sensoren, die Daten bezüglich der Weltkoordinaten erzeugen.

Das für die Detektion und Klassifikation von Verkehrszeichen wesentliche Verfolgen der erfassten Objekte bringt eine Verringerung der Erfassungsfehler von Einzelrahmen-Erfassungen mit sich. Verwendet man ein geeignetes Bewegungsmodell, so kann ein Verfolger falsche positive Vorhersagen ausfiltern, sodass nur noch jene erfassten Werte beibehalten werden, die das erwartete Bewegungsverhalten zeigen. Die Verbindung von Einzelrahmen-Daten über die Zeit kann auch die Zuverlässigkeit der Klassifikation erhöhen.

Mit der erfindungsgemäßen Lösung wird insbesondere ein neues Verfahren zur Verfolgung von Verkehrszeichen für ein Verkehrszeichen-Erfassungssystem und eine Monokamera angegeben. Es werden Bildverarbeitungsverfahren verwendet, um einen Satz von Positions- und Größenmesswerten möglicher Verkehrszeichenkandidaten für die Bildebene zu erzeugen. Es kann dann ein Verfolgungsmodul eingesetzt werden, um die erfassten Werte über die Zeit miteinander in Verbindung zu setzen und falsche positive Vorhersagen während des Verfolgungsprozesses zu beseitigen. Die Verfolgung kann insbesondere auf den folgenden Prinzipien beruhen:

Eine bekannte Einschränkung für die Bewegung von Verkehrszeichen besteht darin, dass die beobachtbare Bewegung von Verkehrszeichen in der Bildebene von der Position des Zeichens im dreidimensionalen Raum abhängt und durch die bekannte Träger- oder Fahrzeugbewegung verursacht wird. Zur Beschreibung des Projektionsverhaltens von Objekten in der realen Welt für die Bildebene kann ein Lochkameramodell herangezogen werden. Bei diesem Modell besitzt ein Zeichen bekanntlich eine in der realen Welt befindliche Position irgendwo auf einer geraden Linie, die durch die Projektion des Zeichens auf die Bildebene der Kamera und den Blickpunkt verläuft. Beispielsweise von der Größe des erfassten Zeichens in der Bildebene und der Kenntnis der Größe eines Zeichens in der realen Welt kann auf die Entfernung des Zeichens geschlossen werden. Unterscheidet sich die beobachtbare Bewegung in der Bildebene bei unterschiedlichen Entfernungen, so kann zusätzlich die Bewegung zur Bestimmung der Entfernung des Zeichens über der Zeit herangezogen werden.

Mit der erfindungsgemäßen Lösung wird unter anderem ein neuer Algorithmus angegeben, der alle diese Bedingungen berücksichtigt, um den Bewegungsablauf des Zeichens in der Bildebene unter Verwendung lediglich eines dreidimensionalen Schätzverfahrens und einer Monokamera zu schätzen. Es kann beispielsweise ein Partikelfilter gewählt werden, um einen jeweiligen Verkehrszeichen-Kandidaten zu verfolgen. Dieses Filter kann in ein Mehrzielverfolgungssystem einbezogen werden, das erfasste Werte über aufeinanderfolgende Zeitschritte einem jeweiligen Filter zuweist. Ein Teil des Zustandsvektors eines jeweiligen Partikels repräsentiert eine mögliche Position des Verkehrszeichens in der dreidimensionalen Welt, die als Schätzraum gewählt wird. Die vollständige Wolke von Partikelpositionen stellt eine grobe Annäherung der Wahrscheinlichkeitsdichte der Zeichenposition basierend auf den vorangegangenen Beobachtungen dar.

Während des Vorhersageschritts des neuen Algorithmus der erfindungsgemäßen Lösung kann jedes Partikel so bewegt werden, als ob der Zustand der Partikelposition der realen Zeichenposition entsprechen würde. Der bewegte Träger bzw. das Fahrzeug kann so definiert werden, dass es im Zentrum des Koordinatensystems der dreidimensionalen Welt liegt. Die durch Sensoren gemessene Träger- bzw. Fahrzeugbewegung wird dazu verwendet, das Koordinatensystem zu rotieren und translatorisch zu verschieben, um jedes Partikel in diesem Koordinatensystem in ein neues, die letzte Träger- bzw. Fahrzeugbewegung enthaltendes Koordinatensystem abzubilden. Es kann ein Diffusionsschritt angewandt werden, um Unsicherheiten in den Träger- bzw. Fahrzeugbewegungen zu berücksichtigen.

Kamera-Kalibrierdaten können dazu verwendet werden, die entsprechenden Positionen der Partikel auf der Bildebene, deren erwartete Größe und eine Torregion zu berechnen, in der die Zeichenmesswerte erwartet werden. Bei dem verwendeten Algorithmus wird zweckmäßigerweise der Mittelwert der rückprojizierten Partikel als Zentrum des Torbereichs verwendet. Eine bestimmte Mahalanoris-Distanz der Kovarianzmatrix der rückprojizierten Partikel kann dazu verwendet werden, die Größe des Bereichs zu bestimmen. Nur dann, wenn ein Zeichen in dem Torbereich erfasst wird, wird das System den erfassten Wert diesem Filter zuweisen, um den Partikelsatz zu aktualisieren. Zur Filterung der erfassten Werte, durch die nur jene Kandiaten beibehalten werden, die das erwartete Bewegungsverhalten eines Verkehrszeichens aufweisen, können alle Objekte entfernt werden, die nicht einem Erfassungswert über einige Zeitschritte zugewiesen werden können. Für weitere Verfahrensschritte werden nur Objekte herangezogen, die imstande sind, zu überleben.

Es wird also die Bewegung eines Verkehrsschildes nachverfolgt, wobei mit einem optischen Sensor wie beispielsweise einer Kamera in regelmäßigen Zeitabständen Bilder aufgenommen werden und mittels eines Detektors eine Anzahl von möglichen Zeichenkandidaten generiert wird. Mit Hilfe der intrinsischen und extrinsischen Kameraparameter (zum Beispiel Lochkameramodell) kann die Entfernung eines jeweiligen Zeichens auf dem Sichtstrahl berechnet werden, wodurch die Position des Zeichens im dreidimensionalen Objektraum berechnet werden kann. Die Bewegung des Zeichens wird im dreidimensionalen Objektraum verfolgt, wobei mit Hilfe eines geeigneten Filters Rauschen bzw. Fehler ausgefiltert werden. Da die Bewegung eines Verkehrzeichens in der Bildebene allein durch die Bewegung des Trägers bzw. Kraftfahrzeugs erzeugt wird, kann die beobachtete Bewegung mit der erwarteten Objekttrajektorie verglichen werden. Kommt es hier zu unzulässigen Abweichungen, das heißt bewegt sich das vermeintliche Verkehrszeichen tatsächlich, so kann es sich nicht um ein Verkehrszeichen handeln.

Als Filter kann beispielsweise ein Partikelfilter, bei dem die Verteilung des Fehlers durch einzelne Punkte mit Gewichten angegeben wird, oder ein Unscented Kalman-Filter verwendet werden, bei dem eine Normalverteilung vorliegt. Es ist insbesondere auch ein Filter zur Berücksichtigung von multimodalen Verteilungen denkbar.

Wird beispielsweise ein Partikelfilter eingesetzt, so wählt man zufällige Punkte aus, die gemäß der Messverteilung um den Messpunkt gestreut sind und eine entsprechende Verteilung in Bildkoordinaten repräsentieren. Die dabei gewonnenen sogenannten "Sample-Punkte" werden dann in die Weltkoordinaten transformiert, womit man das Verkehrszeichen bzw. dessen Position einschließlich einer "Fehlerwolke" in Weltkoordinaten erhält. Dabei repräsentieren die Sample-Punkte die Verteilung des Fehlers in Weltkoordinaten. Die Sample-Punkte werden so bewegt, wie es aufgrund der Träger- bzw. Fahrzeugbewegung erwartet wird (Erwartungswert). Da die Messungen Fehler mit sich bringen können, addiert sich ein zusätzlicher Fehler, sodass die Sample-Punkte nach der Bewegung breiter gestreut sind. Anschließend wird die Partikelwolke zurück in die Bildebene projiziert und aus den Sample-Punkten wird wieder eine Kovarianz berechnet, wobei nur dann eine Detektion erfolgt, wenn der gemessene Abstand unter einer gewissen Mahalanoris-Distanz liegt.

Aus der Rückprojektion kann man dann erkennen, wo sich das Zeichen befinden soll. Mit Hilfe der Mahalanoris-Distanz wird eine Zuordnung von Detektionen zu existierenden Objektschätzungen oder Tracks bestimmt. Anschließend wird die Partikelwolke mit Hilfe der zugeordneten Detektionen neu gewichtet. Nach der Neugewichtung kann ein Rekursionsschritt erfolgen, wodurch die Partikel in den wahrscheinlicheren Bereich des Schätzraumes konzentriert werden.

Wie bereits erwähnt, können anstelle von Verkehrszeichen auch beliebige andere stationäre Objekte detektiert werden. Anstelle einer Kamera können auch beliebige andere optische Sensoren eingesetzt werden. Neben Partikelfiltern können auch beliebige andere geeignete Filter, zum Beispiel Unscented Kalman-Filter usw., Verwendung finden.

Wesentlich ist, dass die Verfolgung nicht mehr wie bisher in Bildkoordinaten, sondern in Weltkoordinaten erfolgt.

Die Erfindung wird im Folgenden anhand eines Ausführungsbeispiels unter Bezugnahme auf die Zeichnung näher beschrieben; in der dieser zeigen:

Fig. 1 verschiedene Schritte einer möglichen Initialisierung,

Fig. 2 verschiedene Schritte eines möglichen Schätzvorgangs und

Fig. 3 verschiedene Schritte einer möglichen Aktualisierung.

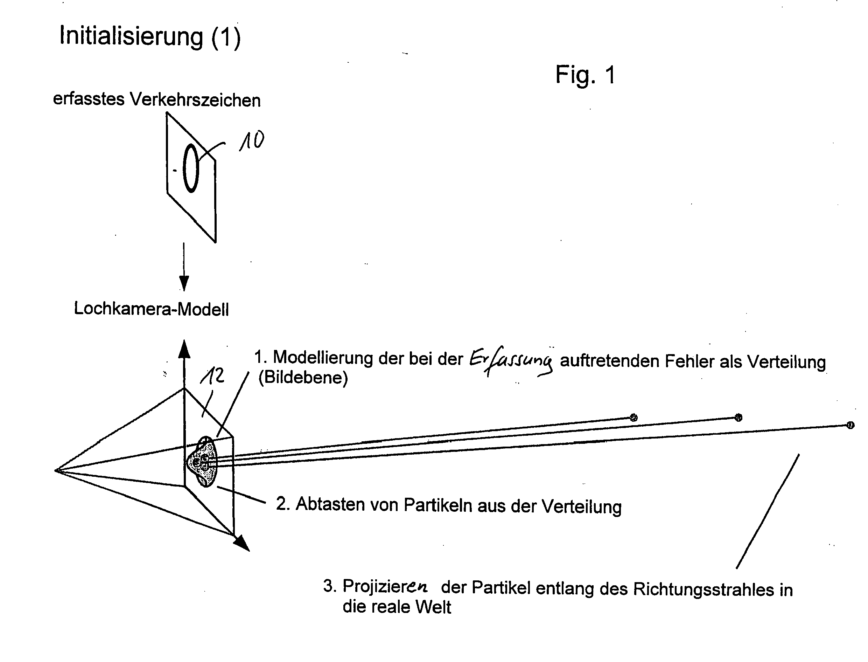

In den Fig. 1 bis 3 ist eine rein beispielhafte Ausgestaltung eines Verfahrens zur Detektion eines vorzugsweise einer Fahrbahn zugeordneten stationären Objekts 10 bekannter Form und Größe in der Umgebung im Sichtbereich eines an einem bewegten Träger wie insbesondere einem Fahrzeug angebrachten optischen Sensors wiedergegeben. Bei dem stationären Objekt (10) kann es sich insbesondere um ein Verkehrszeichen handeln.

Dabei werden mittels des optischen Sensors in zeitlich aufeinanderfolgenden Schritten Bilder aufgenommen. Anhand der aufgenommenen Bildfolge werden durch eine Bildverarbeitung über Vorhersagen mögliche Objektpositionen bestimmt. Zudem werden die Bewegungen des bewegten Trägers gemessen. Der Verlauf der möglichen Objektpositionen wird unter Berücksichtigung der Bewegungen des bewegten Trägers in dreidimensionalen Raum- oder Weltkoordinaten verfolgt. Die tatsächlichen Objektpositionen werden anhand des Verlaufs der möglichen Objektpositionen unter Berücksichtigung der Bewegungen des bewegten Trägers in den dreidimensionalen Raum- oder Weltkoordinaten geschätzt.

Als Schätzer ist insbesondere auch ein multimodaler Schätzer denkbar, der mehr als eine Objekthypothese aufstellen kann.

Die Fig. 1 zeigt verschiedene Schritte einer möglichen Initialisierung.

Danach werden mittels eines Lochkamera-Modells bei der Erfassung auftretende Fehler als Verteilung in die Bildebene 12 modelliert. Danach werden zufällige Partikel von der Verteilung in der Bildebene 12 abgetastet. Anschließend werden dann diese abgetasteten Partikel entlang des Richtungsstrahles in die reale Welt projiziert.

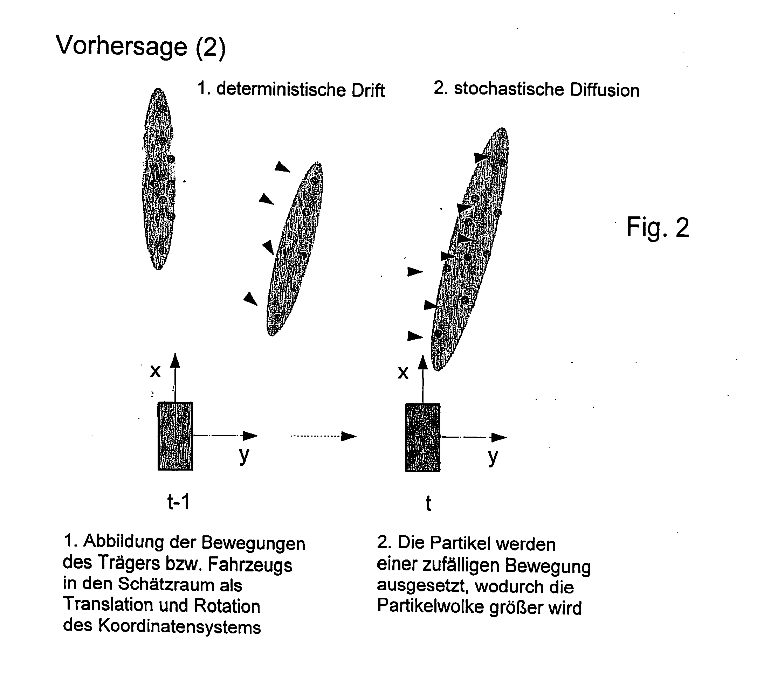

Die Fig. 2 zeigt verschiedene Schritte eines möglichen Schätzvorgangs.

Danach wird die Bewegung des Trägers bzw. des Fahrzeugs als Translation und Rotation des Koordinatensystems in den Schätzraum abgebildet, wodurch sich eine deterministische Drift ergibt.

Anschließend werden die Partikel einer zufälligen Bewegung ausgesetzt, was einer stochastischen Diffusion entspricht. Die Größe der Partikelwolke wird dadurch erhöht.

Der komplette Prädiktionsvorgang ist äquivalent zu einem Sample-Partikel i aus der Beziehung:

$$p_t^i \sim p(x_t \mid x_{t-1} = p_{t-1}^i),$$

wobei

$p_t^i$ = Partikel i zum Zeitpunkt t

$p_{t-1}^i$ = Partikel i zum Zeitpunkt t-1

$x_t$ = Objektzustand zum Zeitpunkt t

$x_{t-1}$ = Objektzustand zum Zeitpunkt t-1

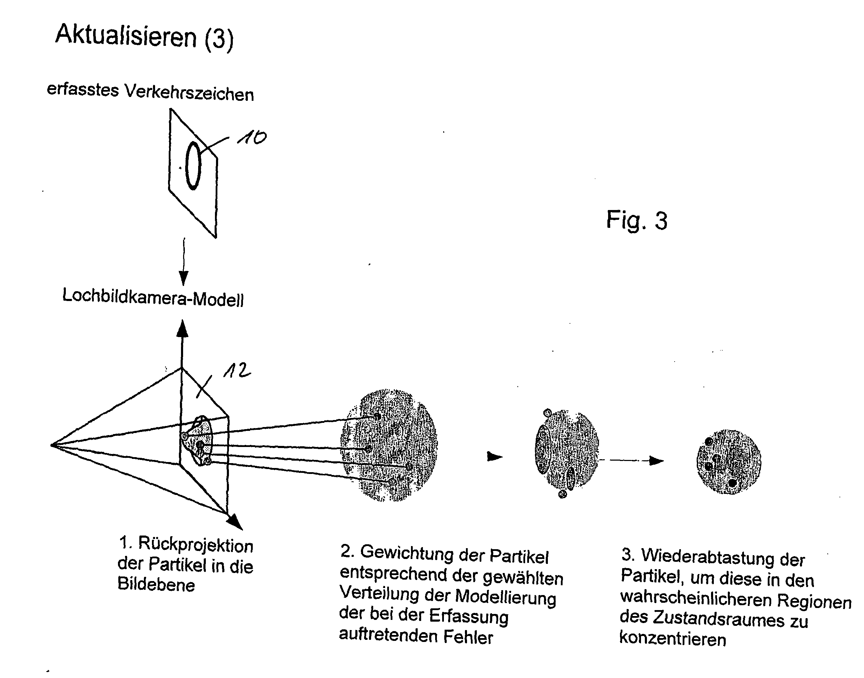

Die Fig. 3 zeigt verschiedene Schritte einer möglichen Aktualisierung.

Dabei werden die das erfasste Zeichen 10 repräsentierenden Partikel in die Bildebene 12 rückprojiziert. Zudem werden die Partikel entsprechend der gewählten Verteilung zur Modellierung der bei der Erfassung auftretenden Fehler gewichtet, was beispielsweise auf der Basis der folgenden Beziehung geschehen kann:

$$w_t^i = w_{t-1}^i p(z \mid x_t = p_t^i),$$

wobei

$w_t^i$ = Gewicht des Partikels i zum Zeitpunkt t

$w_{t-1}^i$ = Gewichts des Partikels i zum Zeitpunkt t-1

$z$ = zugeordneter Messwert

Anschließend erfolgt ein Wiederabtasten der Partikel, um diese in den wahrscheinlicheren Bereichen des Zustandsraumes zu konzentrieren.

**Bezugszeichenliste**

10 stationäres Objekt

12 Bildebene

**Patentansprüche**

1. Verfahren zur Detektion eines vorzugsweise einer Fahrbahn zugeordneten stationären Objekts (10) mit bekannten Merkmalen, insbesondere Verkehrszeichens, in der Umgebung im Sichtbereich eines an einem bewegten Träger wie insbesondere einem Fahrzeug angebrachten optischen Sensors, bei dem mittels des optischen Sensors in zeitlich aufeinander folgenden Schritten Bilder aufgenommen werden, die Bewegungen des bewegten Trägers ermittelt werden, anhand der aufgenommenen Bildfolge mittels einer Bildverarbeitung für jedes Bild Objektmesspunkte anhand der bekannten Merkmale ermittelt werden, und die Objektmesspunkte mittels eines Schätzverfahrens im dreidimensionalen Raum verfolgt werden, wobei bei der Verfolgung im dreidimensionalen Raum die ermittelten Trägerbewegungen und die aktuell ermittelten Objektmesspunkte berücksichtigt werden, um die tatsächlichen Objektpositionen zu schätzen.

2. Verfahren nach Anspruch 1,
   **dadurch gekennzeichnet, dass** Objektmesspunkte, die einen von einem vorgebbaren erwarteten Bewegungsverhalten abweichenden Verlauf aufweisen, von der weiteren Verfolgung ausgeschlossen werden.

3. Verfahren nach Anspruch 1 oder 2,
   **dadurch gekennzeichnet, dass** zur Transformation von Objektmesspunkte enthaltenden Partikeln aus der Bildebene (12) des optischen Sensors in den durch den dreidimensionalen Raum definierten Schätzraum für entsprechende Partikel der Bildebene (12) jeweils ein Richtungsstrahl bestimmt wird, der diejenigen Raumpunkte aus dem Sichtbereich umfasst, welche bei einer Projektion auf die Bildebene auf das jeweilige Partikel projiziert würden, und das jeweilige Partikel unter Berücksichtigung einer angenommen Größe und Entfernung des betreffenden Objektes vom optischen Sensor entlang des Richtungsstrahles in den dreidimensionalen Schätzraum projiziert wird.

4. Verfahren nach Anspruch 3,
   **dadurch gekennzeichnet, dass** für die Transformation in den Schätzraum um einen Objektmesspunkt gestreute Partikel ausgewählt werden, die eine entsprechende Verteilung um den Objektmesspunkt repräsentieren.

5. Verfahren nach einem der vorhergehenden Ansprüche,
   **dadurch gekennzeichnet, dass** die Bewegungen des bewegten Trägers durch eine entsprechende Translation und Rotation des Koordinatensystems in den dreidimensionalen Schätzraum abgebildet werden.

6. Verfahren nach einem der vorhergehenden Ansprüche,
   **dadurch gekennzeichnet, dass** den Partikeln in dem dreidimensionalen Schätzraum eine Zufallsbewegung überlagert wird.

7. Verfahren nach einem der vorhergehenden Ansprüche,
   **dadurch gekennzeichnet, dass** der bewegte Träger als Mitte des Zentrums des dreidimensionalen Schätzraumes definiert wird.

8. Verfahren nach einem der vorhergehenden Ansprüche,
   **dadurch gekennzeichnet, dass** die Partikel nach erfolgter Schätzung aus dem dreidimensionalen Schätzraum in die Bildebene (12) rückprojiziert werden.

9. Verfahren nach Anspruch 8,
   **dadurch gekennzeichnet, dass** die rückprojizierten Partikel insbesondere entsprechend der Fehler um den Objektmesspunkt gewichtet werden.

10. Verfahren nach Anspruch 8 oder 9,
    **dadurch gekennzeichnet, dass** der Mittelwert der rückprojizierten Partikel als Zentrum eines Torbereichs definiert wird, in dem ein jeweiliges Objekt vermutet wird.

11. Verfahren nach Anspruch 10,
    **dadurch gekennzeichnet, dass** die Größe des Torbereichs über eine vorgebbare Mahalanobis-Distanz der Kovarianzmatrix der rückprojizierten Partikel bestimmt wird.

12. Computerprogramm mit Programmcodemitteln zur Durchführung des Verfahrens nach einem der Ansprüche 1 bis 11, wenn das Computerprogramm auf einem Computer oder einer entsprechenden Recheneinheit ausgeführt wird.

13. Computerprogrammprodukt mit Programmcodemitteln, die auf einem computerlesbaren Datenträger gespeichert sind, zur Durchführung des Verfahrens nach einem der Ansprüche 1 bis 11, wenn das Computerprogrammprodukt auf einem Computer oder einer entsprechenden Recheneinheit ausgeführt wird.

14. Vorrichtung zur Detektion eines vorzugsweise einer Fahrbahn zugeordneten stationären Objekts mit bekannten Merkmalen, insbesondere Verkehrszeichens, in der Umgebung im Sichtbereich eines an einem bewegten Träger wie insbesondere einem Fahrzeug angebrachten optischen Sensors, mit einer Datenverarbeitungsanlage, die zur Durchführung des Verfahrens nach einem der Ansprüche 1 bis 11 ausgeführt ist.

# Initialisierung (1)

EP 2 048 618 A1

Fig. 1

erfasstes Verkehrszeichen

Lochkamera-Modell

1. Modellierung der bei der *Erfassung* auftretenden Fehler als Verteilung
(Bildebene)

2. Abtasten von Partikeln aus der Verteilung

3. Projizieren der Partikel entlang des Richtungsstrahles in
die reale Welt

# Vorhersage (2)

1. deterministische Drift      2. stochastische Diffusion

Fig. 2

t-1          t

1. Abbildung der Bewegungen
des Trägers bzw. Fahrzeugs
in den Schätzraum als
Translation und Rotation
des Koordinatensystems

2. Die Partikel werden
einer zufälligen Bewegung
ausgesetzt, wodurch die
Partikelwolke größer wird

EP 2 048 618 A1

# Aktualisieren (3)

erfasstes Verkehrszeichen

EP 2 048 618 A1

Fig. 3

Lochbildkamera-Modell

1. Rückprojektion
der Partikel in die
Bildebene

2. Gewichtung der Partikel
entsprechend der gewählten
Verteilung der Modellierung
der bei der Erfassung
auftretenden Fehler

3. Wiederabtastung der
Partikel, um diese in den
wahrscheinlicheren Regionen
des Zustandsraumes zu
konzentrieren

Europäisches
Patentamt

**EUROPÄISCHER RECHERCHENBERICHT**

Nummer der Anmeldung

EP 07 01 9635

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2005 008131 A1 (DAIMLER CHRYSLER AG [DE]) 3. August 2006 (2006-08-03) | 1-3,7,8, 12-14 | INV. G06T7/20 |
| Y | * Absatz [0007] - Absatz [0016] * | 4-6 | |
| | ----- | | |
| X | ARNOUL P ET AL: "Traffic signs localisation for highways inventory from a video camera on board a moving collection van" INTELLIGENT VEHICLES SYMPOSIUM, 1996., PROCEEDINGS OF THE 1996 IEEE TOKYO, JAPAN 19-20 SEPT. 1996, NEW YORK, NY, USA,IEEE, US, 19. September 1996 (1996-09-19), Seiten 141-146, XP010209725 ISBN: 0-7803-3652-6 | 1,7-14 | |
| Y | * das ganze Dokument * | 4-6 | |
| | ----- | | |
| X | FLEISCHER K ET AL: "Machine-vision-based detection and tracking of stationary infrastructural objects beside innercity roads" INTELLIGENT TRANSPORTATION SYSTEMS, 2001. PROCEEDINGS. 2001 IEEE AUGUST 25-29, 2001, PISCATAWAY, NJ, USA,IEEE, 25. August 2001 (2001-08-25), Seiten 525-530, XP010555827 ISBN: 0-7803-7194-1 | 1,7,8, 12-14 | |
| Y | * Seite 527 - Seite 529 * | 4-6 | |
| | ----- | | |
| | -/-- | | |

RECHERCHIERTE SACHGEBIETE (IPC)

G06T
G06K

Der vorliegende Recherchenbericht wurde für alle Patentansprüche erstellt

| Recherchenort | Abschlußdatum der Recherche | Prüfer |
|---|---|---|
| München | 13. Dezember 2007 | Rockinger, Oliver |

EPO FORM 1503 03.82 (P04C03)

Europäisches Patentamt

**EUROPÄISCHER RECHERCHENBERICHT**

Nummer der Anmeldung

EP 07 01 9635

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | ARNDT, RICHARD AND SCHWEIGER, ROLAND AND RITTER, WERNER AND PAULUS, DIETRICH AND LÖHLEIN, OTTO: "Detection and Tracking of Multiple Pedestrians in Automotive Applications" PROCEEDINGS OF THE IEEE INTELLIGENT VEHICLES SYMPOSIUM, 13. Juni 2007 (2007-06-13), - 15. Juli 2007 (2007-07-15) Seiten 13-18, XP002462338 Istanbul, Turkey * Seite 14 - Seite 15 * ----- | 4-6 | |
| Y | LANVIN P ET AL: "Hybrid particle filtering for real time object tracking" SIGNALS, SYSTEMS AND COMPUTERS, 2005. CONFERENCE RECORD OF THE THIRTY-NINTH ASILOMAR CONFERENCE ON PACIFIC GROVE, CALIFORNIA OCTOBER 28 - NOVEMBER 1,, PISCATAWAY, NJ, USA,IEEE, 28. Oktober 2005 (2005-10-28), Seiten 761-764, XP010900105 ISBN: 1-4244-0131-3 * das ganze Dokument * ----- | 4-6 | |
| Y | IDLER C ET AL: "Realtime Vision Based Multi-Target-Tracking with Particle Filters in Automotive Applications" INTELLIGENT VEHICLES SYMPOSIUM, 2006 IEEE MEGURO-KU, JAPAN 13-15 JUNE 2006, PISCATAWAY, NJ, USA,IEEE, 13. Juni 2006 (2006-06-13), Seiten 188-193, XP010937011 ISBN: 4-901122-86-X * Seite 189 - Seite 190 * ----- | 4-6 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 13. Dezember 2007 | Rockinger, Oliver |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 07 01 9635

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-12-2007

| Im Recherchenbericht angeführtes Patentdokument | Datum der Veröffentlichung | Mitglied(er) der Patentfamilie | Datum der Veröffentlichung |
|---|---|---|---|
| DE 102005008131 A1 | 03-08-2006 | WO 2006081906 A1 | 10-08-2006 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **M. ISARD ; A. BLAKE.** Condensationconditional density program for visual trackicking. *Department of Engineering Science,* 1998